# EUROPEAN PATENT APPLICATION

(11) **EP 2 767 330 A2**
(43) Date of publication of application: **20.08.2014**
(21) Application number: 14153995.7
(22) Date of filing: 05.02.2014
(51) Int. Cl.: B01D 67/00, B01D 69/12, B01D 71/36

(54) **Composite including PTFE Membrane**

(30) Priority: 15.02.2013 US 201313768021
(71) Applicant: Pall Corporation, Port Washington, NY 11050 (US)
(72) Inventor: Gsell, Thomas C., Glen Head, NY New York 11545 (US); Ishee, Michael G., Pace, FL Florida 32571 (US); Singh, Amarnauth, Selden, NY New York 11784 (US); Fielding, Joanna, Pensacola, FL Florida 32514 (US)
(74) Representative: Hoeger, Stellrecht & Partner Patentanwälte

(57) **Abstract**

Composites including porous PTFE membranes comprising an intermediate PTFE membrane having a pore rating of from about 2 nanometers to about 20 nanometers, interposed between, and bound to, porous fluoropolymer membranes having larger pore ratings, and methods of making and using the composites, are disclosed.

## Description

### BACKGROUND OF THE INVENTION

Expanded PTFE (ePTFE) membranes are used in a variety of liquid and gas filtration applications. However, single layer small pore PTFE membranes can be relatively unstable and/or may not function efficiently. Additionally, pleating single layer small pore PTFE membranes adversely affects the efficiency of the membrane. Thus, there is a need for articles including such small pore PTFE membranes that provide efficient filtration, preferably, wherein the articles can be pleated.

These and other advantages of the present invention will be apparent from the description as set forth below.

### BRIEF SUMMARY OF THE INVENTION

An embodiment of the invention provides a composite comprising a porous PTFE membrane having a pore rating in the range of from about 2 nanometers to about 20 nanometers, interposed between, and bound to, with a peel strength in the range of from about 0.2 N/cm to about 2.5 N/cm, first and second porous fluoropolymer membranes, the first and second porous fluoropolymer membranes each having pore ratings of at least about 50 nanometers. Preferably, the composite lacks an adhesive between the membranes. In an embodiment, the porous PTFE membrane having a pore rating from about 2 nanometers to about 20 nanometers comprises first and second porous surfaces wherein the surfaces each comprise a ratio of non-fused nodule area to fused nodule area of about 1 or greater, in some embodiments, about 2 or greater.

In another embodiment, a composite consisting of three porous PTFE membranes bound together is provided, wherein a porous PTFE membrane having a pore rating in the range of from about 2 nanometers to about 20 nanometers is interposed between, and bonded to, with a peel strength in the range of about 0.2 N/cm to about 2.5 N/cm, first and second porous PTFE membranes, the first and second porous PTFE membranes each having pore ratings of at least about 50 nanometers. Preferably, the composite lacks an adhesive between the membranes. In an embodiment, the porous PTFE membrane having a pore rating from about 2 nanometers to about 20 nanometers comprises first and second porous surfaces wherein the surfaces each comprise a ratio of non-fused nodule area to fused nodule area of about 1 or greater, in some embodiments, about 2 or greater.

In another embodiment, a method for making a composite comprising at least three porous fluoropolymer membranes, wherein at least one fluoropolymer membrane is a porous PTFE membrane comprises (1a) subjecting at least one sheet comprising PTFE to elevated pressure for a given exposure time; (1b) creating an initial porosity in the sheet to provide a porous PTFE membrane; (1c) subjecting the porous PTFE membrane to an elevated temperature for a given exposure time wherein the combination of temperature and exposure time does not stabilize the PTFE membrane structure; (2a) subjecting at least one sheet comprising a fluoropolymer to elevated pressure for a given exposure time; (2b) creating an initial porosity in the sheet to provide a porous fluoropolymer membrane; (2c) subjecting the porous fluoropolymer membrane to an elevated temperature for a given exposure time wherein the combination of temperature and exposure time does not stabilize the fluoropolymer membrane structure; (3 a) placing the porous PTFE membrane of (1c) between two porous fluoropolymer membranes of (2c) to provide 3 layers of membranes; (3b) subjecting the 3 layers of membranes to elevated pressure and elevated temperature, wherein the elevated temperature is at least about 200° C and less than the melting temperature of PTFE and the fluoropolymer, wherein the combination of temperature and exposure time stabilizes the membrane structures, to provide the composite. Preferably, the elevated temperature in (3b) is at least about 200° C and less than 325° C.

A method for making a composite comprising at least three porous PTFE membranes according to an embodiment of the invention comprises (1a) subjecting at least one sheet comprising PTFE to elevated pressure for a given exposure time; (1b) creating an initial porosity in the sheet to provide a porous PTFE membrane; (1c) subjecting the porous PTFE membrane to an elevated temperature for a given exposure time wherein the combination of temperature and exposure time does not stabilize the PTFE membrane structure; (2a) subjecting at least one sheet comprising PTFE to elevated pressure for a given exposure time; (2b) creating an initial porosity in the sheet to provide a porous PTFE membrane, wherein the porosity of the PTFE membrane is less than the porosity of the PTFE membrane in (1b); (2c) subjecting the porous PTFE membrane to an elevated temperature for a given exposure time wherein the combination of temperature and exposure time does not stabilize the PTFE membrane structure; (3a) placing the porous PTFE membrane of (1c) between two porous PTFE membranes of (2c) to provide 3 layers of membranes; (3b) subjecting the 3 layers of membranes to elevated pressure and elevated temperature, wherein the elevated temperature is at least about 200° C and less than 325° C, to provide a composite.

Yet another embodiment of a method for making a composite comprising at least three porous fluoropolymer membranes, wherein the intermediate fluoropolymer membrane is a porous PTFE membrane comprises (1a) subjecting at least one sheet comprising PTFE to elevated pressure for a given exposure time; (1b) creating an initial porosity in the sheet to provide a porous PTFE membrane; (1c) subjecting the porous PTFE membrane to an elevated temperature for a given exposure time wherein the combination of temperature and exposure time does not stabilize the PTFE membrane structure; (1d) subjecting the non-stabilized PTFE membrane to elevated pressure for a given exposure time; (1e) subsequently subjecting the non-stabilized PTFE membrane to an elevated temperature of at least about 200° C and less than 325° C for at least about 10 seconds, wherein the membrane is not contacted by a heating element while being subjected to the elevated temperature; (2a) subjecting at least one sheet comprising a fluoropolymer to elevated pressure for a given exposure time; (2b) creating an initial porosity in the sheet to provide a porous fluoropolymer membrane; (2c) subjecting the porous fluoropolymer membrane to an elevated temperature for a given exposure time wherein the combination of temperature and exposure time does not stabilize the fluoropolymer membrane structure; (3a) placing the porous PTFE membrane of (1e) between two porous fluoropolymer membranes of (2c) to provide 3 layers of membranes; (3b) subjecting the 3 layers of membranes to elevated pressure and elevated temperature, wherein the elevated temperature is at least about 200° C and less than the melting temperature of PTFE and the fluoropolymer, to provide the composite. Preferably, the elevated temperature in (3b) is at least about 200° C and less than 325° C, more preferably, the sheet comprising a fluoropolymer in (2a) is a sheet comprising PTFE, such that the composite comprises three porous PTFE membranes.

Filter devices and articles including the composites, and methods of using the composites, are also provided in accordance with embodiments of the invention.

### DETAILED DESCRIPTION OF THE INVENTION

In accordance with an embodiment of the present invention, a composite including at least one PTFE membrane is provided comprising a porous PTFE membrane having a pore rating in the range of from about 2 nanometers to about 20 nanometers, interposed between, and bound to, with a peel strength in the range of from about 0.2 N/cm to about 2.5 N/cm, first and second porous fluoropolymer membranes, the first and second porous fluropolymer membranes each having pore ratings of at least about 50 nanometers.

Typically, the first and second porous fluoropolymer membranes are PTFE membranes.

In another embodiment, a composite consisting of three PTFE membranes bound together is provided, wherein a porous PTFE membrane having a pore rating in the range of from about 2 nanometers to about 20 nanometers is interposed between, and bonded to, with a peel strength in the range of from about 0.2 N/cm to about 2.5 N/cm, first and second porous PTFE membranes, the first and second porous PTFE membranes each having pore ratings of at least about 50 nanometers.

Preferably, the composite lacks an adhesive between the membranes. In some embodiments of the composite, the porous PTFE membrane having a pore rating from about 2 nanometers to about 20 nanometers comprises first and second porous surfaces wherein the surfaces each comprise a ratio of non-fused nodule area to fused nodule area of about 1 or greater, in some embodiments, about 2 or greater.

In some embodiments of the composite, the first and second porous PTFE membranes have pore ratings in the range of from about 50 nanometers to about 5 micrometers, for example, pore ratings in the range of from about 0.1 micrometers to about 1 micrometers.

In some embodiments, the composite is corrugated.

A method for making a composite comprising at least three porous fluoropolymer membranes, wherein at least one fluoropolymer membrane is a porous PTFE membrane according to an embodiment of the invention comprises (1a) subjecting at least one sheet comprising PTFE to elevated pressure for a given exposure time; optionally removing lubricant from the sheet; (1b) creating an initial porosity in the sheet to provide a porous PTFE membrane; (1c) subjecting the porous PTFE membrane to an elevated temperature for a given exposure time wherein the combination of temperature and exposure time does not stabilize the PTFE membrane structure; (2a) subjecting at least one sheet comprising a fluoropolymer to elevated pressure for a given exposure time; optionally removing lubricant from the sheet; (2b) creating an initial porosity in the sheet to provide a porous fluoropolymer membrane; (2c) subjecting the porous fluoropolymer membrane to an elevated temperature for a given exposure time wherein the combination of temperature and exposure time does not stabilize the fluoropolymer membrane structure; (3a) placing the porous PTFE membrane of (1c) between two porous fluoropolymer membranes of (2c) to provide 3 layers of membranes; (3b) subjecting the 3 layers of membranes to elevated pressure and elevated temperature, wherein the elevated temperature is at least about 200° C and less than the melting temperature of PTFE and the fluoropolymer, wherein the combination of temperature and exposure time stabilizes the membrane structures, to provide a composite. Preferably, the elevated temperature in (3b) is in the range of from at least about 200° C to less than 325° C, more preferably, the sheet comprising a fluoropolymer in (2a) is a sheet comprising PTFE, such that the composite comprises three porous PTFE membranes.

Optionally, (1c) can comprise both subjecting the porous PTFE membrane to an elevated temperature for a given exposure time wherein the combination of temperature and exposure time does not stabilize the PTFE membrane structure, and subsequently subjecting the non-stabilized PTFE membrane to elevated pressure for a given exposure time.

A method for making a composite comprising at least three porous PTFE membranes according to an embodiment of the invention comprises (1a) subjecting at least one sheet comprising PTFE to elevated pressure for a given exposure time; optionally removing lubricant from the sheet; (1b) creating an initial porosity in the sheet to provide a porous PTFE membrane; (1c) subjecting the porous PTFE membrane to an elevated temperature for a given exposure time wherein the combination of temperature and exposure time does not stabilize the PTFE membrane structure; (2a) subjecting at least one sheet comprising PTFE to elevated pressure for a given exposure time; optionally removing lubricant from the sheet; (2b) creating an initial porosity in the sheet to provide a porous PTFE membrane, wherein the porosity of the PTFE membrane is less than the porosity of the PTFE membrane in (1b); (2c) subjecting the porous PTFE membrane to an elevated temperature for a given exposure time wherein the combination of temperature and exposure time does not stabilize the PTFE membrane structure; (3a) placing the porous PTFE membrane of (1c) between two porous PTFE membranes of (2c) to provide 3 layers of membranes; (3b) subjecting the 3 layers of membranes to elevated pressure and elevated temperature, wherein the elevated temperature is at least about 200° C and less than 325° C, to provide a composite.

Yet another embodiment of a method for making a composite comprising at least three porous fluoropolymer membranes, wherein the intermediate fluoropolymer membrane is a porous PTFE membrane comprises (1a) subjecting at least one sheet comprising PTFE to elevated pressure for a given exposure time; optionally removing lubricant from the sheet; (1b) creating an initial porosity in the sheet to provide a porous PTFE membrane; (1c) subjecting the porous PTFE membrane to an elevated temperature for a given exposure time wherein the combination of temperature and exposure time does not stabilize the PTFE membrane structure; (1d) subjecting the non-stabilized PTFE membrane to elevated pressure for a given exposure time; (1e) subsequently subjecting the non-stabilized PTFE membrane to an elevated temperature of at least about 200° C and less than 325° C for at least about 10 seconds, wherein the membrane is not contacted by a heating element while being subjected to the elevated temperature; (2a) subjecting at least one sheet comprising a fluoropolymer to elevated pressure for a given exposure time; optionally removing lubricant from the sheet; (2b) creating an initial porosity in the sheet to provide a porous fluoropolymer membrane; (2c) subjecting the porous fluoropolymer membrane to an elevated temperature for a given exposure time wherein the combination of temperature and exposure time does not stabilize the fluoropolymer membrane structure; (3a) placing the porous PTFE membrane of (1e) between two porous fluoropolymer membranes of (2c) to provide 3 layers of membranes; (3b) subjecting the 3 layers of membranes to elevated pressure and elevated temperature, wherein the elevated temperature is at least about 200° C and less than the melting temperature of PTFE and the fluoropolymer, to provide a composite. Preferably, the elevated temperature in (3b) is at least about 200° C and less than 325° C, more preferably, the sheet comprising a fluoropolymer in (2a) is a sheet comprising PTFE, such that the composite comprises three porous PTFE membranes.

The composites according the invention advantageously provide a stable fine-pored PTFE membrane as an intermediate membrane wherein the composite can be corrugated without seriously affecting the performance of the intermediate membrane. Additionally, or alternatively, the composites are particularly suitable for applications including filtration of fluids containing air bubbles, as the membranes in the composites are not easily separated and thus, entrapment of bubbles between membranes (that can cause "blisters") can be minimized, and at the same time, the membranes are not so tightly bound (e.g., by melting) as that would adversely affect the pore structures of the membranes.

The layers in the composite are bound together and have a peel strength in the range of from about 0.2 N/cm to about 2.5 N/cm, wherein the peel strength is determined according to ASTM D1876-08, "Standard Test Method of Peel Resistance of Adhesives (T-Peel Test)." Preferably, the peel strength in the range of from about 0.2 N/cm to about 2.4

N/cm, and in some embodiments, the peel strength in the range of from about 0.2 N/cm to about 2.0 N/cm

In accordance with a preferred embodiment of the invention, the three porous membranes are bound together by placing the three membranes in contact with one another and applying heat and pressure to the combination of membranes, without the presence of a separate adhesive material therebetween. Without being bound to any particular theory, it is believed that little or no melting occurs at the surfaces of the membranes, so that there is little or no adverse affect on the pore structure of the membranes.

Advantageously, methods according to embodiments of the invention are suitable for both continuous membrane production and batch production. Additionally, methods according to embodiments of the invention can be "tunable," efficiently producing membranes of various pore ratings or grades.

While in a preferred embodiment, the first, second, and intermediate porous membranes comprise porous PTFE membranes, the first and second porous membranes can comprise any fluoropolymer membrane, e.g., comprising tetrafluoroethylene/hexafluoropropylene copolymer, polyvinylfluoride, and polyvinylidene fluoride (PVDF).

In accordance with an embodiment of the invention, sheets comprising a fluoropolymer and/or sheets comprising PTFE, can be initially prepared as is known in the art. Typically, powder PTFE resin (finer powder resin is used for the intermediate fine pored PTFE membrane, larger powder resin is used for the larger pored fluoropolymer or PTFE membranes) is blended with a fluid lubricant, formed into a billet, and pressed to form preforms, which are extruded through a fan-shaped die having a reduction ratio in the range of 25:1 to 100:1 to form flattened sheets. Each flattened sheet is calendared to a targeted thickness, and the lubricant is preferably removed from the flattened sheet, e.g., using a high pressure steam contact surface to evaporate off the lubricant. The calendared sheet, depleted of lubricant, is preferably expanded in the machine direction by passing over a set of heated (100° C to 175° C) variable speed controlled rollers, wherein the stretching ratio is typically about 1.1 to about 20 times the original length. Preferably, the machine-directed oriented sheet (or tape) is then stretched in the transverse direction to achieve the desired stretch ratio, typically a stretch ratio of about 12 to about 30 times the width. Preferably, the tape is passed through a heated zone (typical temperatures are in the range of about 550° F to about 875° F (about 288° C to 468° C)) during or directly after stretching in the transverse direction

(however, in contrast with methods known in the art, wherein the heating stabilizes the membrane structure, in accordance with embodiments of the present invention, the heating is carried out for a short period of time, e.g., less than about 60 seconds, preferably, in the range of about 10 seconds to about 40 seconds, so that the structure is not stabilized).

In accordance with embodiments of the invention, the resultant porous PTFE membrane or porous fluoropolymer membrane and/or the multiple layers of membranes, can subsequently be subjected to elevated pressure for a given exposure time, and subsequently subjected to elevated temperature for an exposure time of at least about 10 seconds (to stabilize the membrane(s) individually or within the multiple layer structure), wherein the elevated temperature is at least about 200° C and less than 325° C. In some embodiments, individual membranes and/or the multiple layer structures are not contacted by a heating element while being subjected to the elevated temperature.

With respect to passing the tape through a heated zone (typical temperatures are in the range of about 550° F to about 875° F (about 288° C to 468° C)) during or directly after stretching in the transverse direction as summarized above, in contrast with the preparation as is known in the art, in a preferred embodiment according to the invention, this is carried out without contacting a heated element.

After passing the tape through a heated zone, in accordance with embodiments of the invention, the individual porous fluoropolymer membranes, the individual porous PTFE membranes (preferably, biaxially expanded porous PTFE membranes) or the multiple layers of porous membranes, are compressed under elevated pressure (e.g., calendared, or compressed by other processes known in the art), before exposure to elevated temperature. The initial porosity of the membranes can be created by, for example, stretching, expansion, perforation, and/or other processes as is known in the art. Typically, the membrane(s) and/or the multiple layer structure is compressed under a pressure of at least about 30 pounds per square inch (psi) (about 207 kPa), for example, in the range from about 50 psi (about 345 kPa) to about 600 psi (about 4140 kPa), or more, preferably, the membranes are compressed under a pressure in the range of from about 225 psi (1552 kPa) to about 350 psi (2415 kPa), or more.

Typically, the membranes and/or multiple layer structures pass through the calendar rolls at a rate in the range of from about 5 feet per minute (fpm) (about 0.03 meters per second (mps)) to about 30 fpm (about 0.15 mps). However, the rate can be faster or slower. Preferably, the rate is at least about 10 fpm (about 0.05 mps).

After the porous membranes or multiple layer structures have been compressed, they are subjected to elevated temperature for a given exposure time to stabilize the membranes, wherein the elevated temperature is in the range of from about 200° C to less than the melting point of unmodified fluoropolymer and PTFE, preferably, wherein the elevated temperature is about 200° C to less than 325° C, which is less than the melting point of PTFE (the melting point of pure unmodified PTFE is about 345° C), and the exposure time is typically at least 10 seconds, e.g., in the range of from about 20 seconds to about 35 minutes, preferably, the exposure time is at least about 45 seconds, for example, in the range of about 60 seconds to about 20 minutes. Typically, the elevated temperature is at least about 200° C (though less than 325° C), for example, in the range of from about 220° C to about 320° C, but temperatures can be higher (though less than 325° C), or lower. If desired, the membrane can be unilaterally expanded (e.g., stretched in the transverse direction from about 5% to about 50%) and/or biaxially expanded while subjecting the membrane to elevated temperature.

Typically, the membranes and/or the multiple layer structures pass through the heated air chamber at a rate in the range of from about 5 fpm (about 0.03 mps) to about 30 fpm (about 0.15 mps). However, the rate can be faster or slower. Preferably, the rate is at least about 10 fpm (about 0.05 mps).

The exposure time at elevated temperature can differ from the exposure time at elevated pressure.

In accordance with one preferred embodiment of a method for making a fine pore PTFE membrane used in a composite (wherein the fine pore PTFE membrane is the intermediate membrane in the composite) according to an embodiment of the invention, the PTFE membrane is subjected to elevated temperature (to stabilize the membrane) without major surfaces of the membrane (the upper and lower surfaces) being directly contacted by a heating element such as a heated roller; rather, at least one major surface of the membrane is exposed to, for example, convective or radiative heat, including infrared, microwave, or heated air, e.g., exposing the membrane to heated air in a heated air chamber such as a conveyor oven or the like while the membrane is restrained on at least opposing edges to prevent shrinking while passing through the oven, at a temperature of at least about 200° C and below 325 °C. Without being bound to any particular mechanism, it is believed that subjecting the porous membrane to an elevated temperature below the melting point of PTFE without the major surfaces of the membrane being directly contacted by a heating element is similar to an annealing process, resulting is less fusing and/or closing of pores while stabilizing the crystalline structure. In contrast, and without being bound to any particular mechanism, it is believed that subjecting the porous membrane to elevated temperature at or above the melting point of PTFE while directly contacting either or both major surfaces of the membrane with a heating element is similar to a sintering process, resulting is more fusing and/or closing of pores.

Alternatively, or additionally, subjecting the fine pore intermediate porous PTFE membrane to an elevated temperature (to stabilize the membrane) can occur with the PTFE membrane interposed between the larger pore fluoropolymer or PTFE membranes, e.g., the PTFE membrane is held in place by the larger pore membranes, and the multiple layer structure is subjected to an elevated temperature, in the range of from about 200° C to below 325 °C, to stabilize the intermediate PTFE membrane.

With respect to holding the intermediate PTFE membrane in place, layers of membranes are unwound from rolls such that a layer of the finer pore more retentive PTFE membrane is layered between layers of the larger pore membranes. The three membranes, layered together, are fed into a calendar at a specified force and speed, providing a slight bonding to the layers for ease of handling of the composite during further processing. If desired, the composite is put through a tenter at a specified speed and stretch and temperature (which can comprise contacting a heated element, or without contacting a heated element) to heat-stabilize the membrane layers. Upon exiting the calendar and/or tenter, the layers of membrane are mechanically bound together, and the composite handles as a single layer.

If desired, the composite, or rolls of the composite, are further processed, e.g., to impart non-dewettability to the composite and to assemble composites into element format.

Membranes and composites according to the invention have good mechanical stability, for example, illustratively, in contrast with an untreated membrane that is heated to 150° C for 30 minutes and allowed to cool, exhibiting a change in dimension of about 40% to about 50%, membranes in composites according to some embodiments of the invention exhibit a change in dimension in the range of from about 1% to about 30%.

In some embodiments, the first and second porous surfaces of the intermediate PTFE membrane, e.g., prepared by a process including subjecting the major surfaces of the membrane (i.e., the upper and lower surfaces of the membrane) to elevated temperature without contacting the surfaces with a heated element, each have a ratio of a non-fused nodule area to fused nodule area is about 1 or greater (e.g., in the range of from about 1 to about 5), more typically, about 1.5 or greater, preferably, about 2 or greater, for example, in the range of about 2 to about 5.

There are a variety of methods for determining the ratio of non-fused nodule area to fused nodule area. In Example 3 in this application, SEM images of membrane surfaces are obtained, and copied using AUTOCAD software (AutoDesk, Inc., San Rafael, CA). Lines are drawn around the perimeters of the nodes that are flattened and melted together (fused), and the software calculates the total area for all of the fused nodes. Similarly, lines (using a different line type) are drawn around the perimeters of the nodes that are non-fused, and the software calculates the total area for all of the flattened fused nodes. The software calculates the ratio of non-fused nodule area to fused nodule area.

The pore structure used for the porous fluoropolymer and porous PTFE membranes depends on the size of the particles to be removed from the fluid, the composition of the fluid to be treated, and the desired effluent level of the treated fluid. The porous fluoropolymer membranes and porous PTFE membranes in the composite can have any suitable pore structure (the porous PTFE intermediate membrane can have any suitable pore structure in the nanometer range), e.g., a pore rating, a pore size (for example, as evidenced by bubble point, or by K_{L} as described in, for example, U.S. Patent 4,340,479 (e.g., in the range of about 65 to about 100 psi), or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore diameter (e.g., when characterized using the modified OSU F2 test as described in, for example, U.S. Patent 4,925,572), removal rating, or gold particle efficiency or challenge testing rating (e.g., as described in Mizuno, T., et al., "A Novel Filter Rating Method Using Less Than 30-nm Gold Nanoparticle and Protective Ligand," IEEE Transactions of Semiconductor Manufacturing, 22(4), 452, (2009)).

A typical method for determining gold particle filtration efficiency based on Mizuno, T., et al. in IEEE Transactions of Semiconductor Manufacturing, 22(4), 452, (2009) can be summarized as follows. Materials: ultrapure water (UPW) source; gold colloid nanoparticles, monodisperse, NIST traceable source; preferably, a surface treatment agent such as mercaptosuccininc acid or 2-amino-2-hydroxymethyl-1,3-propanediol; filter housing for cartridge or flat sheet disk; flow control and measurement, pressure control and measurement; injection or syringe pump; pH, resistivity, TOC, temperature measurement of UPW; and an inductively Coupled Plasma Mass Spectrometer (ICP-MS) instrument to measure Au concentration. Test Protocol: install filter cartridge or flat sheet sample while minimizing contamination; prewet the filter with alcohol followed by flushing in UPW; pretreat the filter in the surface treatment agent for 30 minutes to allow all surfaces to be coated; initiate UPW flow to wet the filter; vent the housing to eliminate trapped air; monitor TOC, resistivity, pH, and temperature of the UPW; collect sample downstream of the filter as the UPW control (while minimizing contamination) and collect a representative sample; inject Au colloid suspension (at the appropriate concentration, diluted in UPW containing the appropriate surface treatment agent); use the lowest concentration to yield 3 Log Reduction Value (LRV) resolution on ICP-MS (for flat sheet sample can make up entire volume to Au NP challenge concentration and use pump or N₂ pressure to flow challenge suspension through the flat sheet sample); collect upstream and downstream sample aliquots, e.g., at 10, 30, and 60 minutes; measure Au concentration via ICP-MS using UPW control sample as blank, traceable commercially available Au standards for calibration, and checking for linearity of Au colloid concentration range (dilution may be required for upstream samples); calculate Au colloid NP concentration from ICP-MS Au measurement (for example, Au colloid may be AuCl3); and calculate LRV from 60 minute samples: LRV=log(upstream/downstream).

Preferably, the small pore intermediate porous PTFE membranes in the composites according to embodiments of the invention have a pore rating in the range of from about 1 nanometers to about 50 nanometers, typically, in the range of from about 2 nanometers to about 35 nanometers, preferably in the range of from about 5 nanometers to about 20 nanometers. Typically, the large pore porous fluoropolymer (preferably PTFE) membranes in composites according to the invention have a pore rating in the range of from about 50 nanometers to about 5 micrometers, preferably, in the range of from about 0.1 micrometers to about 1 micrometer.

The porous fluoropolymer membranes, preferably, porous PTFE membranes, can have any desired critical wetting surface tension (CWST, as defined in, for example, U.S.

Patent 4,925,572). The CWST can be selected as is known in the art, e.g., as additionally disclosed in, for example, U.S. Patents 5,152,905, 5,443,743, 5,472,621, and 6,074,869. Typically, the membrane has a CWST in the range of about 19 dynes/cm (about 19 x 10⁻⁵ N/cm) to about 25 dynes/cm (about 25 x 10⁻⁵ N/cm).

The surface characteristics of the membranes and/or the composite can be modified (e.g., to affect the CWST, to include a surface charge, e.g., a positive or negative charge, and/or to alter the polarity or hydrophilicity of the surface) by wet or dry oxidation, by coating or depositing a polymer on the surface, or by a grafting reaction. Modifications include, e.g., irradiation, a polar or charged monomer, coating and/or curing the surface with a charged polymer, and carrying out chemical modification to attach functional groups on the surface. Grafting reactions may be activated by exposure to an energy source such as gas plasma, vapor plasma, corona discharge, heat, a Van der Graff generator, ultraviolet light, electron beam, or to various other forms of radiation, or by deposition using a plasma treatment.

In some embodiments, the composite consists of 3 membranes. However, in other embodiments, the composite, and/or a filter and/or filter element including the composite, can include additional elements, layers, or components, that can have different structures and/or functions, e.g., at least one of any one or more of the following: prefiltration, support, drainage, spacing and cushioning. Illustratively, the filter can also include at least one additional element such as a mesh and/or a screen.

In accordance with embodiments of the invention, the filter, filter element, and/or composite can have a variety of configurations, including planar, pleated, and hollow cylindrical.

The filter, filter element and/or the composite itself is typically disposed in a housing comprising at least one inlet and at least one outlet and defining at least one fluid flow path between the inlet and the outlet, wherein the composite is across the fluid flow path, to provide a filter device. Preferably, for crossflow applications, the filter, filter element and/or composite is disposed in a housing comprising at least one inlet and at least two outlets and defining at least a first fluid flow path between the inlet and the first outlet, and a second fluid flow path between the inlet and the second outlet, wherein the composite is across the first fluid flow path, to provide a filter device. The filter device may be sterilizable. Any housing of suitable shape and providing at least one inlet and at least one outlet may be employed.

The housing can be fabricated from any suitable rigid impervious material, including any impervious thermoplastic material, which is compatible with the fluid being processed. For example, the housing can be fabricated from a metal, such as stainless steel, or from a polymer. In an embodiment, the housing is a polymer, in some embodiments, a transparent or translucent polymer, such as an acrylic, polypropylene, polystyrene, or a polycarbonated resin.

The following examples further illustrate the invention but, of course, should not be construed as in any way limiting its scope.

### EXAMPLE 1

This example demonstrates the preparation of composites according to an embodiment of the invention, wherein a 10 nm pore rated PTFE membrane is interposed between first and second 450 nm (.45 micron) pore rated PTFE membranes.

### Preparation of .45 micron PTFE membranes

Fine powder PTFE resin is mixed with a hydrocarbon based fluid lubricant and subsequently formed into billets. Approximately 70-90 psi (about 483 to about 621 kPa) is applied to the billet via a pneumatic press and held for one minute to form preforms. Preforms are extruded to a reduction ratio of 50:1 via a hydraulic ram extruder at 650 psi pressure through a fan shaped die assembly into flattened sheets approximately 54 mils (about 1372 microns) thick.

The flattened sheet is calendered to a targeted final thickness of 10 mils (about 254 microns). The lubricant is then removed from the flattened sheet using a high pressure steam contact surface to evaporate off the lubricant.

The calendered sheet, depleted of lubricant, is expanded in the machine direction by passing over a set of variable speed (fast and slow) controlled rollers heated at 150° C. Media is stretched to 1.1 times the original length. The machine-directed oriented media is subsequently stretched in the transverse direction by clipping the edges of the machine-directed oriented media in the transverse direction and increasing distance between the clips to achieve a stretch ratio of 17:1. The tape is passed through a heated oven (radiant heat non-contact with a heated element) at 850° F (about 454° C) for 20 seconds directly after stretching in the transverse direction.

### Preparation of 10 nm PTFE membrane

Fine powder PTFE resin is mixed with a hydrocarbon based fluid lubricant and subsequently formed into billets. Approximately 70-90 psi (about 483 to about 621 kPa) is applied to the billet via a pneumatic press and held for one minute to form a preform. The perform is extruded to a reduction ratio of 50:1 via a hydraulic ram extruder at 650 psi pressure through a fan shaped die assembly into a flattened sheet approximately 54 mils (about 1372 microns) thick.

The flattened sheet is calendered to a targeted final thickness of 8 mils (about 203 microns). The lubricant is then removed from the flattened sheet using a high pressure steam contact surface to evaporate off the lubricant.

The calendered sheet, depleted of lubricant, is expanded in the machine direction by passing over a set of variable speed (fast and slow) controlled rollers heated at 150° C. Media is stretched to 3.0 times the original length. The machine-directed oriented media is subsequently stretched in the transverse direction by clipping the edges of the machine-directed oriented media in the transverse direction and increasing distance between the clips to achieve a stretch ratio of 21:1. The tape is passed through a heated oven (radiant heat non-contact with a heated element) at 650° F (about 343° C) for 20 seconds directly after stretching in the transverse direction.

### Forming the composite

Layers of membranes are unwound from rolls such that a sheet layer of the 10 nm pore membrane (the finer more retentive membrane) is layered between sheet layers of the 450 nm pore membranes (the larger pore membranes).

The three membranes, layered together, are fed into a calendar at 300 psi (about 2068 kPa) and at a rate of 10 fpm (0.05 mps), providing a slight bonding to the layers for ease of handling of the composite during further processing. The 3 layers exiting the calendar have a total thickness of about 5 mils (about 127 microns), and are passed through a heated air chamber (oven; radiant heat, non-contact with a heated element) at a rate of 15 fpm (about .08 mps), without stretching, and exposed to a temperature of 300° C for 60 seconds. Upon exiting the heated air chamber, the layers of membrane are mechanically bonded together, and the composite handles as a single layer.

### Properties for the composites are as follows:

The isopropyl alcohol (IPA) K_{L} as described in U.S. Patent 4,340,479 in the range of 65 to 100 psi is 54.0-61.0, and the gold particle efficiency rating (as described in Mizuno, T., et al., "A Novel Filter Rating Method Using Less Than 30-nm Gold Nanoparticle and Protective Ligand," IEEE Transactions of Semiconductor Manufacturing, 22(4), 452, (2009) and as summarized earlier) is 1.0-2.7 log removal, corresponding to a 10 nm pore rating. The deltaP is 8.7 to 15.4 inches Hg, the thickness is in the range of from 4.8 to 6.2 mils (about 122 to about 157 microns).

After being heated to 150° C for 30 minutes and allowed to cool, the composites shrink 6.0% to 17.0%.

### EXAMPLE 2

This example demonstrates the preparation of composites according to an embodiment of the invention, wherein a 10 nm PTFE membrane is interposed between first and second .45 micron PTFE membranes, and preparation of the composite includes contacting a heated element.

0.45 micron and 10 nm PTFE membranes are prepared as in Example 1.

### Forming the composite

Layers of membranes are unwound from rolls such that a sheet layer of the 10 nm pore membrane (the finer more retentive membrane) is layered between sheet layers of the 450 nm pore membranes (the larger pore membranes).

The three membranes, layered together, are fed into a calendar at 300 psi (about 2068 kPa) and at a rate of 10 fpm (0.05 mps), providing a slight bonding to the layers for ease of handling of the composite during further processing. The 3 layers exiting the calendar have a total thickness of about 5 mils (about 127 microns). The outer membrane layers are contacted with aluminum foil (7 mils (about 178 microns) thick) and placed in a forced air oven at 315° C for 20 minutes. The composite is allowed to cool to room temperature, and after 8 hours, the foil interleaf is removed.

### Properties for the composites are as follows:

The isopropyl alcohol (IPA) K_{L} as described in U.S. Patent 4,340,479 in the range of 65 to 100 psi is 54.3-61.5, and the gold particle efficiency value is 2.0-2.4 log removal, corresponding to a 10 nm pore rating. The deltaP is 5.3 to 5.8 inches Hg, the thickness is in the range of from 3.7 to 4.6 mils (about 94 to about 117 microns).

After being heated to 150° C for 30 minutes and allowed to cool, the composites shrink 8.1 % to 15.6%.

### EXAMPLE 3

This example demonstrates the preparation of a composite according to an embodiment of the invention, wherein a 10 nm PTFE membrane having first and second porous surfaces each comprising a ratio of non-fused nodule area to fused nodule area of about 1 or greater is interposed between first and second .45 micron PTFE membranes.

0.45 micron PTFE membranes are prepared as in Example 1.

### Preparation of 10 nm PTFE membrane

Fine powder PTFE resin is mixed with a hydrocarbon based fluid lubricant and subsequently formed into a billet. Approximately 70-90 psi (about 483 to about 621 kPa) is applied to the billet via a pneumatic press and held for one minute to form a perform, which is extruded to a reduction ratio of 50:1 via a hydraulic ram extruder at 650 psi pressure through a fan shaped die assembly into a flattened sheet approximately 54 mils (about 1372 microns) thick.

The flattened sheet is calendered to a targeted final thickness of 8 mils (about 203 microns). The lubricant is then removed from the flattened sheet using a high pressure steam contact surface to evaporate off the lubricant.

The calendered sheet, depleted of lubricant, is expanded in the machine direction by passing over a set of variable speed (fast and slow) controlled rollers heated at 150° C. Media is stretched to 3.0 times the original length. The machine-directed oriented media is subsequently stretched in the transverse direction by clipping the edges of the machine-directed oriented media in the transverse direction and increasing distance between the clips to achieve a stretch ratio of 21:1. The tape is passed through a heated oven (radiant heat non-contact with a heated element) at 343° C for 20 seconds directly after stretching in the transverse direction.

Subsequently, the porous PTFE membrane is calendered at room temperature under elevated pressure of 300 psi (about 2068 kPa) to a final target thickness of 0.5 mils (about 13 microns). The medium is passed through the calendar rolls at a rate of 10 fpm (0.05 mps).

After the porous membrane has been compressed, it is passed through a heated air chamber (oven; radiant heat, non-contact with a heated element), without stretching, and exposed to a temperature of 300° C for 60 seconds. The membrane is passed through the heated air chamber at a rate of 10 fpm (.05 mps).

The first and second porous surfaces of the membrane have a ratio of non-fused nodule area to fused nodule area of about 2.2.

### Forming the composite

Layers of membranes are unwound from rolls such that a sheet layer of the 10 nm pore membrane (the finer more retentive membrane) is layered between sheet layers of the 450 nm pore membranes (the larger pore membranes).

The three membranes, layered together, are fed into a calendar at 300 psi (about 2068 kPa) and at a rate of 10 fpm (0.05 mps), providing a slight bonding to the layers for ease of handling of the composite during further processing. The 3 layers exiting the calendar have a total thickness of about 5 mils (about 127 microns), and are passed through a heated air chamber (oven; radiant heat, non-contact with a heated element) at a rate of 15 fpm (about .08 mps), without stretching, and exposed to a temperature of 300° C for 60 seconds. Upon exiting the heated air chamber, the layers of membrane are mechanically bonded together, and the composite handles as a single layer.

Properties for the composites are as follows:

The isopropyl alcohol (IPA) K_{L} as described in U.S. Patent 4,340,479 in the range of 65 to 100 psi is 42.0 to 44.2. The deltaP is 11.3 to 14.9 inches Hg, the thickness is in the range of from 5.9 to 6.2 mils (about 150 to about 157 microns).

After being heated to 150° C for 30 minutes and allowed to cool, the composites shrink 6.0 to 8.0%.

### EXAMPLE 4

This example demonstrates the preparation of composites according to an embodiment of the invention, wherein a 10 nm PTFE membrane is interposed between first and second .45 micron PTFE membranes.

0.45 micron PTFE membranes are prepared as in Example 1.

### Preparation of 10 nm PTFE membrane

Fine powder PTFE resin is mixed with a hydrocarbon based fluid lubricant and subsequently formed into a billet. Approximately 70-90 psi (about 483 to about 621 kPa) is applied to the billet via a pneumatic press and held for one minute to form a perform, which is extruded to a reduction ratio of 50:1 via a hydraulic ram extruder at 650 psi pressure through a fan shaped die assembly into a flattened sheet approximately 54 mils (about 1372 microns) thick.

The flattened sheet is calendered to a targeted final thickness of 8 mils (about 203 microns). The lubricant is then removed from the flattened sheet using a high pressure steam contact surface to evaporate off the lubricant.

The calendered sheet, depleted of lubricant, is expanded in the machine direction by passing over a set of variable speed (fast and slow) controlled rollers heated at 150° C. Media is stretched to 3.0 times the original length. The machine-directed oriented media is subsequently stretched in the transverse direction by clipping the edges of the machine-directed oriented media in the transverse direction and increasing distance between the clips to achieve a stretch ratio of 21:1. The tape is passed through a heated oven (radiant heat non-contact with a heated element) at 343° C for 20 seconds directly after stretching in the transverse direction.

Subsequently, the porous PTFE membrane is calendered at room temperature under elevated pressure of 300 psi (about 2068 kPa) to a final target thickness of 0.5 mils (about 13 microns). The medium is passed through the calendar rolls at a rate of 10 fpm (0.05 mps).

### Forming the composite

Layers of membranes are unwound from rolls such that a sheet layer of the 10 nm pore membrane (the finer more retentive membrane) is layered between sheet layers of the 450 nm pore membranes (the larger pore membranes).

The three membranes, layered together, are fed into a calendar at 300 psi (about 2068 kPa) and at a rate of 10 fpm (0.05 mps), providing a slight bonding to the layers for ease of handling of the composite during further processing. The 3 layers exiting the calendar have a total thickness of about 5 mils (about 127 microns), and are passed through a heated air chamber (oven; radiant heat, non-contact with a heated element) at a rate of 15 fpm (about .08 mps), without stretching, and exposed to a temperature of 300° C for 60 seconds. Upon exiting the heated air chamber, the layers of membrane are mechanically bonded together, and the composite handles as a single layer.

Properties for the composites are as follows:

The isopropyl alcohol (IPA) K_{L} as described in U.S. Patent 4,340,479 in the range of 65 to 100 psi is 82.3 to 86.7. The deltaP is 22.5 to 27.5 inches Hg, the thickness is in the range of from 4.6 to 4.8 mils (about 117 to about 122 microns).

After being heated to 150° C for 30 minutes and allowed to cool, the composites shrink 6.0 to 7.0%.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A composite comprising an intermediate porous PTFE membrane comprising a first porous surface and a second porous surface and a pore rating in the range of from about 2 nanometers to about 20 nanometers, interposed between, and bonded to, with a peel strength in the range of about 0.2 N/cm to about 2.5 N/cm, first and second porous fluoropolymer membranes, the first and second porous fluoropolymer membranes each having pore ratings of at least about 50 nanometers.

2. The composite of claim 1, wherein the first and second porous surfaces of the intermediate porous PTFE membrane each comprise a ratio of non-fused nodule area to fused nodule area of about 1 or greater.

3. The composite of claim 1 or 2, wherein the first and second porous fluoropolymer membranes are PTFE membranes.

4. A composite, the composite consisting of three porous PTFE membranes bound together, wherein a porous PTFE membrane having a pore rating in the range of from about 2 nanometers to about 20 nanometers is interposed between, and bonded to, with a peel strength in the range of about 0.2 N/cm to about 2.5 N/cm, first and second porous PTFE membranes, the first and second porous PTFE membranes each having pore ratings of at least about 50 nanometers.

5. The composite of claim 4, wherein the porous PTFE membrane having a pore rating in the range of from about 2 nanometers to about 20 nanometers has first and second porous surfaces each comprising a ratio of non-fused nodule area to fused nodule area of about 1 or greater.

6. The composite of any one of claims 3-5, wherein the first and second porous PTFE membranes have pore ratings in the range of from about 50 nanometers to about 5 micrometers.

7. The composite of any one of claims 3-5, wherein the first and second porous PTFE membranes have pore ratings in the range of from about 0.1 micrometers to about 1 micrometers.

8. The composite of any one of claims 1-7, wherein the composite is corrugated.

9. A method of making a composite comprising at least three porous fluoropolymer membranes, wherein at least one fluoropolymer membrane is a porous PTFE membrane comprising:
(1a) subjecting at least one sheet comprising PTFE to elevated pressure for a given exposure time;
(1b) creating an initial porosity in the sheet to provide a porous PTFE membrane;
(1c) subjecting the porous PTFE membrane to an elevated temperature for a given exposure time wherein the combination of temperature and exposure time does not stabilize the PTFE membrane structure;
(2a) subjecting at least one sheet comprising a fluoropolymer to elevated pressure for a given exposure time;
(2b) creating an initial porosity in the sheet to provide a porous fluoropolymer membrane;
(2c) subjecting the porous fluoropolymer membrane to an elevated temperature for a given exposure time wherein the combination of temperature and exposure time does not stabilize the fluoropolymer membrane structure;
(3 a) placing the porous PTFE membrane of (1c) between two porous fluoropolymer membranes of (2c) to provide 3 layers of membranes; and;
(3b) subjecting the 3 layers of membranes to elevated pressure and elevated temperature, wherein the elevated temperature is at least about 200° C and less than the melting temperature of PTFE and the fluoropolymer, wherein the combination of temperature and exposure time stabilizes the membrane structures, to provide the composite.

10. A method for making a composite comprising at least three porous PTFE membranes comprising:
(1a) subjecting at least one sheet comprising PTFE to elevated pressure for a given exposure time;
(1b) creating an initial porosity in the sheet to provide a porous PTFE membrane;
(1c) subjecting the porous PTFE membrane to an elevated temperature for a given exposure time wherein the combination of temperature and exposure time does not stabilize the PTFE membrane structure;
(2a) subjecting at least one sheet comprising PTFE to elevated pressure for a given exposure time;
(2b) creating an initial porosity in the sheet to provide a porous PTFE membrane, wherein the porosity of the PTFE membrane is less than the porosity of the PTFE membrane in (1b);
(2c) subjecting the porous PTFE membrane to an elevated temperature for a given exposure time wherein the combination of temperature and exposure time does not stabilize the PTFE membrane structure;
(3a) placing the porous PTFE membrane of (1c) between two porous PTFE membranes of (2c) to provide 3 layers of membranes; and,
(3b) subjecting the 3 layers of membranes to elevated pressure and elevated temperature, wherein the elevated temperature is at least about 200° C and less than 325° C, to provide the composite.

11. A method for making a composite comprising at least three porous fluoropolymer membranes, wherein the intermediate fluoropolymer membrane is a porous PTFE membrane comprising:
(1a) subjecting at least one sheet comprising PTFE to elevated pressure for a given exposure time;
(1b) creating an initial porosity in the sheet to provide a porous PTFE membrane;
(1c) subjecting the porous PTFE membrane to an elevated temperature for a given exposure time wherein the combination of temperature and exposure time does not stabilize the PTFE membrane structure;
(1d) subjecting the non-stabilized PTFE membrane to elevated pressure for a given exposure time;
(1e) subsequently subjecting the non-stabilized PTFE membrane to an elevated temperature of at least about 200° C and less than 325° C for at least about 10 seconds, wherein the membrane is not contacted by a heating element while being subjected to the elevated temperature;
(2a) subjecting at least one sheet comprising a fluoropolymer to elevated pressure for a given exposure time;
(2b) creating an initial porosity in the sheet to provide a porous fluoropolymer membrane;
(2c) subjecting the porous fluoropolymer membrane to an elevated temperature for a given exposure time wherein the combination of temperature and exposure time does not stabilize the fluoropolymer membrane structure;
(3 a) placing the porous PTFE membrane of (1e) between two porous fluoropolymer membranes of (2c) to provide 3 layers of membranes; and,
(3b) subjecting the 3 layers of membranes to elevated pressure and elevated temperature, wherein the elevated temperature is at least about 200° C and less than the melting temperature of PTFE and the fluoropolymer, to provide the composite.
